# EUROPEAN PATENT SPECIFICATION

(11) **EP 3 548 988 B1**
(45) Date of publication and mention of the grant of the patent: **02.03.2022**
(21) Application number: 17764953.0
(22) Date of filing: 28.08.2017
(51) Int. Cl.: G06F 3/01, G06F 3/0484

(54) **SWITCHING OF ACTIVE OBJECTS IN AN AUGMENTED AND/OR VIRTUAL REALITY ENVIRONMENT**
WECHSELN EINES AKTIVEN OBJEKTS IN EINER UMGEBUNG DER ERWEITERTEN UND/ODER VIRTUELLEN REALITÄT
COMMUTATION D'OBJETS ACTIFS DANS UN ENVIRONNEMENT DE RÉALITÉ AUGMENTÉE ET/OU VIRTUELLE

(30) Priority: 30.11.2016 US 201615364729
(43) Date of publication of application: 09.10.2019
(73) Proprietor: Google LLC, Mountain View, CA 94043 (US)
(72) Inventor: MACGILLIVRAY, Ian, Mountain View California 94043 (US)
(74) Representative: Maikowski & Ninnemann Patentanwälte Partnerschaft mbB
(86) International application number: PCT/US2017/048961
(87) International publication number: WO 2018/101995

(56) References cited:
- WO-A1-2016/089638
- US-A1- 2014 372 944
- US-B1- 9 035 878

## Description

### FIELD

This document relates, generally, to object selection and placement in an augmented reality and/or a virtual reality environment.

### BACKGROUND

An augmented reality (AR) and/or virtual reality (VR) system may generate an immersive, three-dimensional (3D) virtual environment. A user may interact with objects in this virtual environment using various electronic devices, such as, for example, a helmet or other head mounted device including a display, glasses or goggles that a user looks through when viewing a display device, gloves fitted with sensors, external devices such as handheld devices, keyboards, and other such electronic devices. When immersed in the virtual environment and interacting with objects and features in the virtual environment using, for example, a keyboard and/or a mouse, the user's experience in the virtual environment may be enhanced by the ability to select, move, and switch focus on objects in the virtual environment without having to disengage one, or both, hands from the keyboard to manually manipulate the virtual objects.

US 9,035,878 B1 relates to a wearable computer that allows a wearer to provide input data via eye movement and/or via head-movement. US 2014/0372944 A1 relates to a user input for a near-eye, see-through display device. WO 2016/089638 A1 relates to a method of controlling a displayed portion of an application launcher.

### SUMMARY

The invention is set out in the independent claims 1 and 6 with preferred embodiments being set out in the dependent claims.

### BRIEF DESCRIPTION OF THE DRAWINGS

FIG. 1 is an example implementation of an augmented and/or virtual reality system including a head mounted display in communication with an external input device, in accordance with implementations as described herein.
FIGs. 2A and 2B are perspective views of an example head mounted display device, in accordance with implementations as described herein.
FIG. 3 is a block diagram of an augmented and/or virtual reality system, in accordance with implementations as described herein.
FIGs. 4A-4E illustrate a system for switching of virtual objects in response to a detected gaze input in an augmented and/or virtual reality environment, in accordance with implementations as described herein.
FIGs. 5A-5F and 6A-6C illustrate visual indicators displayed in connection with the switching of virtual objects in response to a detected gaze input in augmented and/or virtual reality environments, in accordance with implementations as described herein.
FIGs. 7A-7B illustrate switching of virtual objects in response to a detected gaze input in an augmented and/or virtual reality environment, in accordance with implementations as described herein.
FIG. 8 is a flowchart of a method of combining eye gaze input and touch surface input for user interfaces in an augmented and/or virtual reality environment, in accordance with implementations as described herein.
FIG. 9 shows an example of a computer device and a mobile computer device that can be used to implement the techniques described herein.

### DETAILED DESCRIPTION

A user immersed in an augmented and/or a virtual reality environment wearing, for example, a head mounted display (HMD) device may explore the virtual environment and interact with the virtual environment through various different types of inputs including, for example, manipulation of one or more electronic device(s) separate from the HMD and/or manipulation of the HMD itself, and/or eye directional gaze, and/or head movement and/or hand/arm gestures, and the like. The user may manipulate various electronic devices, independently from or together with the HMD, to cause a desired action in the virtual environment. The virtual environment may be displayed to the user on a display of the HMD, with the one or more external electronic devices (that are operably coupled with the HMD) not readily visible to the user while wearing the HMD. For example, a user may make text entries reflected in the virtual environment using an external keyboard, without being able to actually see the keyboard. For example, a touch typist may find it disruptive, both to the manual process of typing and to the thought process, to disengage one or both hands from the keyboard to use a hand gesture to switch between virtual screens, and then re-engage with the keyboard. Similarly, it may be awkward, and prone to error, to use keyboard shortcuts and/or hot keys on the external keyboard when interacting with virtual objects in the virtual environment displayed on the HMD in this manner. A system and method, in accordance with implementations described herein, may provide the user with a natural way of interacting with virtual objects and switching activation and focus between virtual objects in the virtual environment, by addressing one or more artificial constraints encountered due to operation in a virtual environment that may not otherwise be encountered when operating in an ambient environment, such as, for example an inability to see peripheral devices and the like.

In a system and method, in accordance with implementations as described herein, the user's eye gaze direction and movement, and/or the user's head gaze direction and movement, are detected, tracked, and translated into a user input in the virtual environment generated by the HMD. For example, an optical tracking device, such as an optical gaze tracking device included in a head mounted display (HMD) device, may detect and track the user's eye gaze direction and movement, and/or sensors in the HMD may detect and track the user's head gaze direction and movement. This detected and tracked gaze direction and movement is translated into, for example, a selection of a virtual object in the virtual environment displayed by the HMD, a movement of a virtual object in the virtual environment displayed by the HMD, a switching or shifting of focus of virtual objects in the virtual environment displayed by the HMD, and the like. The ability to select, move, and switch focus on virtual objects in this manner, without disengaging from the external keyboard (or other manually manipulated external device) may facilitate text entry inputs, improve input accuracy, and enhance the user's experience.

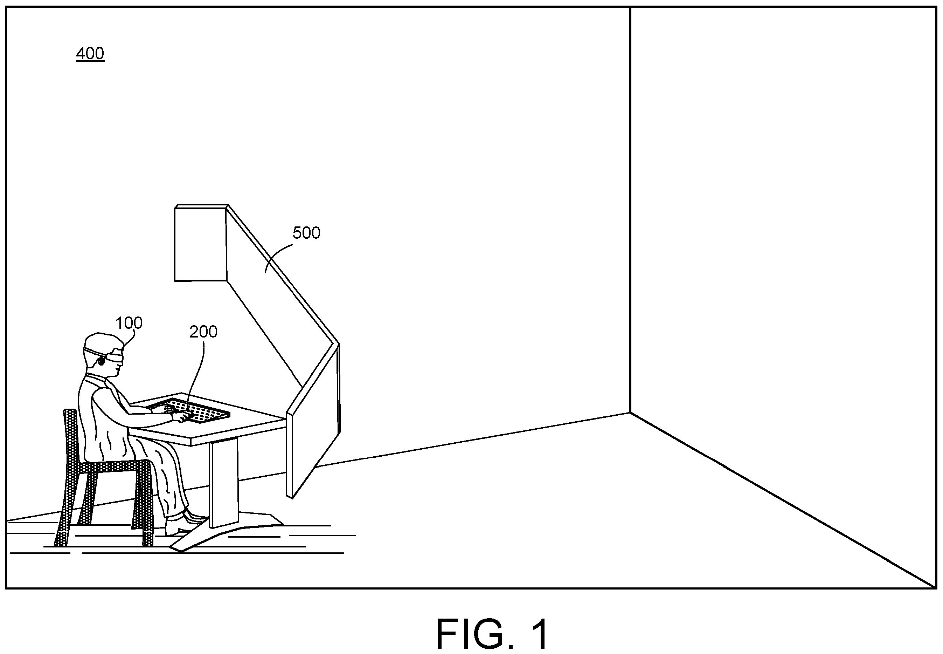

FIG. 1 is a third person view of a user wearing an HMD 100. In this example third person view, the user is in a physical space 400, in which the augmented/virtual reality system is operable, and is sitting at a physical, real world desk, viewing a virtual scene, including a plurality of virtual objects, on a display of the HMD 100. While the virtual scene is visible to the user within the HMD 100, a representation 500 of the virtual scene displayed to the user on a display of the HMD 100 is shown in FIG. 1, simply for ease of discussion and illustration. In the example shown in FIG. 1, the user interacts with an external device 200, for example, a physical, real world, keyboard 200 positioned on the physical, real world desk. The external device 200 may be operably coupled with, and communicate with, the HMD 100 via, for example, a wired connection, or a wireless connection such as, for example, a WiFi or Bluetooth connection. This may provide for communication between and the exchange of data between the external device 200, or keyboard, and the HMD 100. As manual user inputs are received by the external device 200, or keyboard 200, the user may interact with virtual objects in the virtual scene 500 generated by the HMD 100 based on the manual inputs received at the keyboard 200.

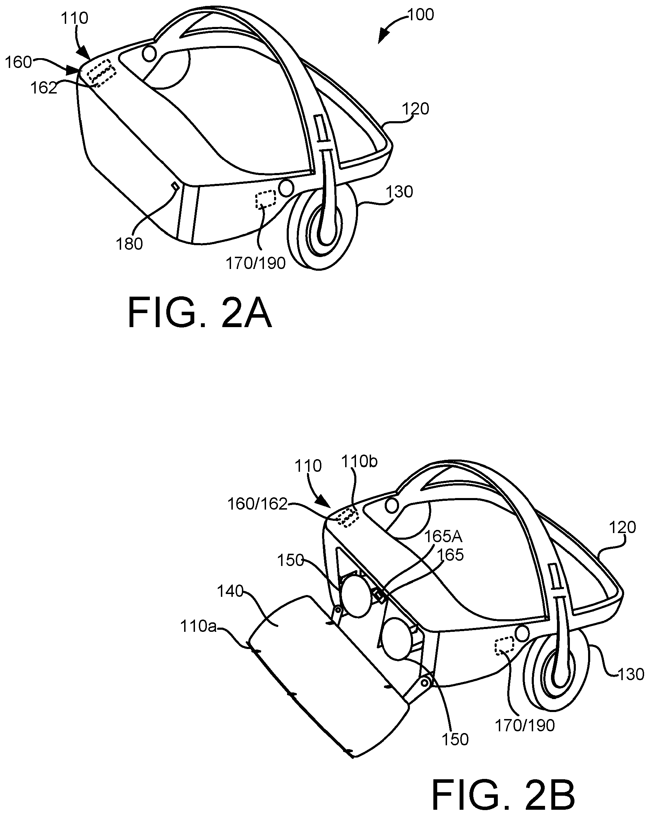

FIGs. 2A and 2B are perspective views of an example HMD, such as, for example, the HMD 100 worn by the user in the example shown in FIG. 1. The HMD 100 may include a housing 110 coupled to a frame 120, with an audio output device 130 including, for example, speakers mounted in headphones, also coupled to the frame 120. In FIG. 2B, a front portion 110a of the housing 110 is rotated away from a base portion 110b of the housing 110 so that some of the components received in the housing 110 are visible. A display 140 may be mounted on an interior facing side of the front portion 110a of the housing 110. Lenses 150 may be mounted in the housing 110, between the user's eyes and the display 140 when the front portion 110a is in the closed position against the base portion 110b of the housing 110. The HMD 100 may include a sensing system 160 including various sensors and a control system 170 including a processor 190 and various control system devices to facilitate operation of the HMD 100. For example, in some implementations, the sensing system 160 may include an inertial measurement unit (IMU) 162 including various different types of sensors such as, for example, an accelerometer, a gyroscope, a magnetometer, and the like. A position and orientation of the HMD 100 may be detected and tracked based on data provided by the IMU 162, allowing the system to in turn, detect and track the user's head gaze direction and movement. A camera 180 may capture still and/or moving images that may be used to help track a physical position of the user and/or other external devices in communication with/operably coupled with the HMD 100. The captured images may also be displayed to the user on the display 140 in a pass through mode.

According to the invention, the HMD 100 includes a gaze tracking device 165 to detect and track an eye gaze direction, and eye gaze movement, of the user. The gaze tracking device 165 may include one or more sensors 165A to detect and track eye gaze direction and movement. For example, the gaze tracking device may include one or more light sensor(s) and/or one or more image sensor(s) 165A, and the like, to capture images of the user's eyes, for example, a particular portion of the user's eyes, such as, for example, the pupil. The images captured by the sensor(s) 165A may be processed to detect and track direction and movement of the user's eye gaze, and the detected and tracked eye gaze may be processed as a user input to be translated into a corresponding interaction in the immersive virtual experience.

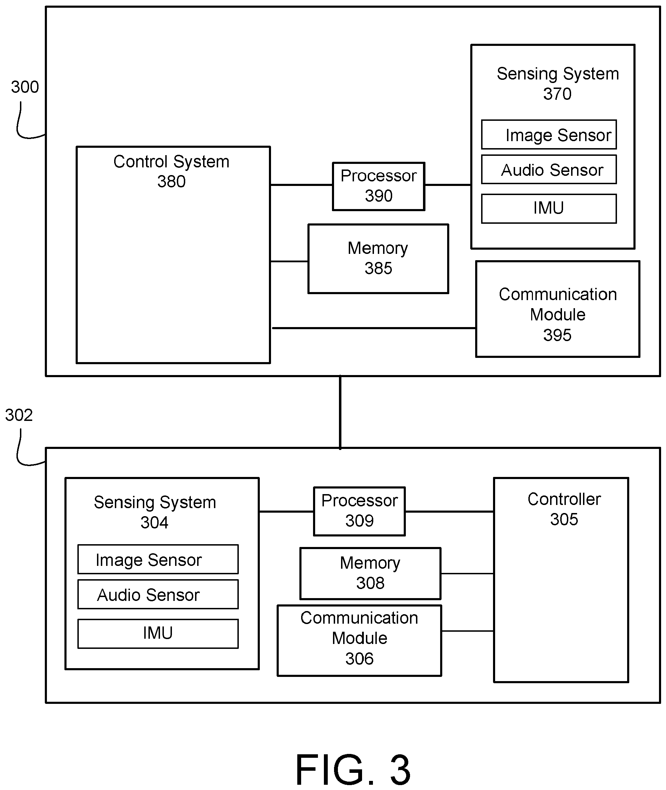

A block diagram of a system, in accordance with implementations described herein, is shown in FIG. 3. The system may include a first electronic device 300 (such as, for example, an HMD as described above with respect to FIGs. 1 and 2A-2B), and a second electronic device 302 (such as, for example, a keyboard as described above with respect to FIG. 1, or other external computing device such as, for example, one or more handheld electronic devices, a mouse, and the like) in communication with the first electronic device 300.

The first electronic device 300 may include a sensing system 360 and a control system 370, which may be similar to the sensing system 160 and the control system 170, respectively, shown in FIGs. 2A and 2B. The sensing system 360 may include one or more different types of sensors, including, for example, a light sensor, an audio sensor, an image sensor, a distance/proximity sensor, and/or other sensors and/or different combination(s) of sensors. For example, the sensing system may include an IMU to detect and track a position and orientation of the first electronic device (to detect and track the user's head gaze direction and movement, as with the IMU 162 described above with respect to FIGs. 2A-2B), and one or more image sensors positioned to detect and track the user's eye gaze (such as the gaze tracking device 165 described above with respect to FIGs. 2A-2B). The control system 370 may include, for example, a power/pause control device, audio and video control devices, an optical control device, a transition control device, and/or other such devices and/or different combination(s) of devices. The sensing system 360 and/or the control system 370 may include more, or fewer, devices, depending on a particular implementation. The elements included in the sensing system 360 and/or the control system 370 may have a different physical arrangement (e.g., different physical location) within, for example, an HMD other than the HMD 100 shown in FIGs. 2A and 2B. The first electronic device 300 may also include a processor 390 in communication with the sensing system 360 and the control system 370. The processor 390 may process inputs received from the sensing system 360, such as, for example, head gaze direction and movement inputs captured by the IMU 162, and/or eye gaze direction and movement inputs captured by the eye gaze tracking device 165, as described above with respect to FIGs. 2A-2B, to process inputs and execute instructions corresponding to the detected gaze inputs. The first electronic device 300 may also include a memory 380, and a communication module 350 providing for communication between the first electronic device 300 and another, external device, such as, for example, the second electronic device 302. The processor 390 may also process inputs received from the second electronic device 302.

The second electronic device 302 may include a communication module 306 providing for communication and data exchange between the second electronic device 302 and another device, external to the second electronic device, such as, for example, the first electronic device 300. In some implementations, depending on a particular configuration of the second electronic device 302 (i.e., a keyboard, versus a handheld controller or a mouse), the second electronic device 302 may include a sensing system 304 including, for example, an image sensor and an audio sensor, such as is included in, for example, a camera and microphone, an IMU, a touch sensor such as is included in a touch sensitive surface of a handheld electronic device, or smartphone, and other such sensors and/or different combination(s) of sensors. A processor 309 may be in communication with the sensing system 304 and a controller 305 of the second electronic device 302, the controller 305 having access to a memory 308 and controlling overall operation of the second electronic device 302.

As noted above, when immersed in the virtual reality environment generated by the HMD 100, it may be disruptive for the user to remove one, or both, hands from a manual physical input device, such as a physical keyboard, for selection, movement, switching of focus and the like of virtual objects in the virtual environment. Similarly, it may be difficult for the user to regain proper positioning relative to the physical keyboard after removing one, or both hands from the physical keyboard to interact with one or more virtual objects displayed in the virtual environment, and/or after removing one, or both hands from the physical keyboard to engage with another physical input device, such as a controller or a mouse, to interact with one or more virtual objects displayed in the virtual environment. It may also be difficult, even for a relatively effective touch typist, to use, for example, keyboard based shortcuts and/or keyboard based hotkeys, to accomplish tasks, in particular, when accomplishing tasks which may otherwise involve removal of one or both hands from the physical keyboard, when the user is wearing the HMD 100 as described above, and thus cannot see the physical keyboard. Thus, in a system and method, in accordance with implementations described herein, at least one of eye gaze direction and movement, and/or head gaze direction and movement, may be translated into a corresponding user input causing a desired action related to one or more virtual objects displayed in the virtual environment, indicating selection, movement, shift of focus and the like related to the one or more virtual objects.

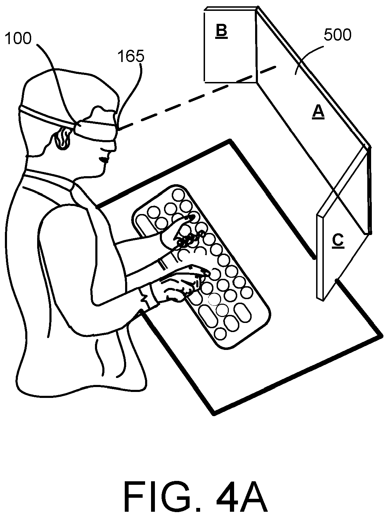

FIGs. 4A-4E illustrate an example implementation, in which user eye gaze direction and movement is detected and tracked, for example, by the gaze tracking device 165 of the HMD 100. The detected eye gaze direction, and movement, may be processed, for example, by the processor 190 of the HMD 100, or another processor included in the system and in communication with the HMD 100, to determine a corresponding user input directed to a particular one or more of the virtual objects displayed to the user in the virtual environment.

In the example shown in FIG. 4A, the user is in the physical space, at the physical desk, interacting with the physical device 200, while viewing the virtual scene 500 displayed by the HMD 100. In this example, the physical device 200 is a physical keyboard 200 positioned on the physical desk to receive manual inputs from the user, for ease of discussion and illustration. However, the principles to be described do not necessarily rely on the peripheral use of another, external electronic device (in addition to the HMD 100). Further, if an external electronic device is in use, such an external electronic device is not necessarily a keyboard, and the principles to be described may be applied in conjunction with the user's use of other types of manual input devices for interaction in a virtual environment.

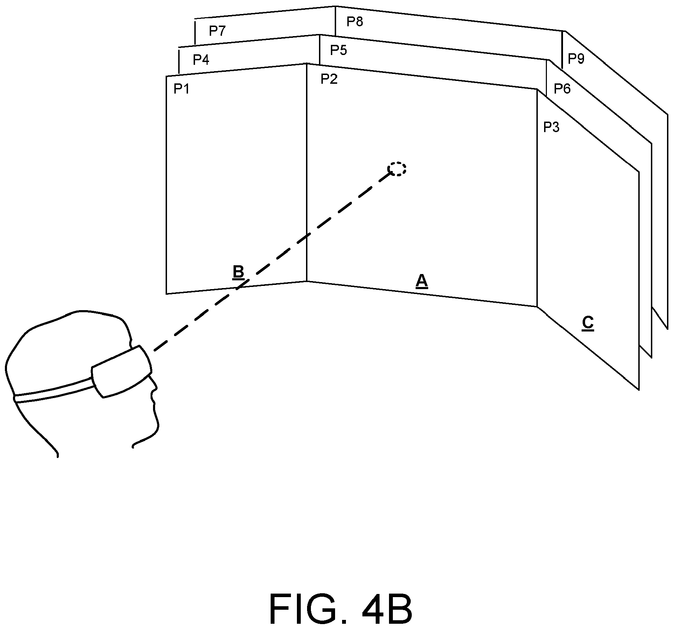

In this example, the virtual scene 500 displayed to the user, for example, on the display 140 of the HMD 100, includes a series of documents, or files, or icons, P1 through P9 (see FIG. 4B), arranged in a tri-fold structure, representing virtual objects available to the user, for ease of discussion and illustration. However, the principles to be described may be applied to interaction with other types of virtual objects, elements, features and the like, and the virtual objects in the virtual scene may be displayed with the virtual objects arranged in other types of arrangements such as, for example, a curved work space, a bi-fold work space, and other arrangements. In this example, the virtual scene 500 may include a plurality of virtual work spaces, arranged based on, for example, the type of virtual objects to be displayed, a user's level of interaction with the different virtual objects displayed, the type of action to be taken on the virtual objects, user preferences, and the like. In the example shown in FIGs. 4A and 4B, the virtual scene 500 includes a main virtual work space A, in which virtual objects occupying the user's current attention or main focus may be displayed, and auxiliary virtual work spaces B and C, where other virtual objects may be displayed, and available to the user as necessary. The virtual work spaces may be displayed in other arrangements, and more, or fewer virtual work spaces may be displayed, depending on the needs of a particular user, the type of virtual objects being displayed, and other such factors.

In the example shown in FIG. 4B, the user's attention, or focus, is on the virtual item P2, occupying the main virtual work space A. The user may then determine that he wants to bring another one of the virtual items P1-P9, for example, the virtual item P6, into the main virtual work space A. In some implementations, this movement of the virtual item P6 from the position shown in FIG. 4B into the main virtual work space A could be accomplished by, for example, a hand gesture and/or controller gesture, touching and dragging the virtual item P6 from the position shown in FIG. 4B into the main virtual work space A. While this hand/controller gesture may accomplish the desired movement of the virtual item P6, it may also involve a disengagement of one, or both, of the user's hands from the keyboard 200, thus disrupting the user's work process. In a system and method, in accordance with implementations described herein, the user may select, move, rearrange, and otherwise manipulate the virtual objects displayed in the virtual scene/virtual environment without disengaging from an external manual manipulation device such as a keyboard, or mouse, or controller.

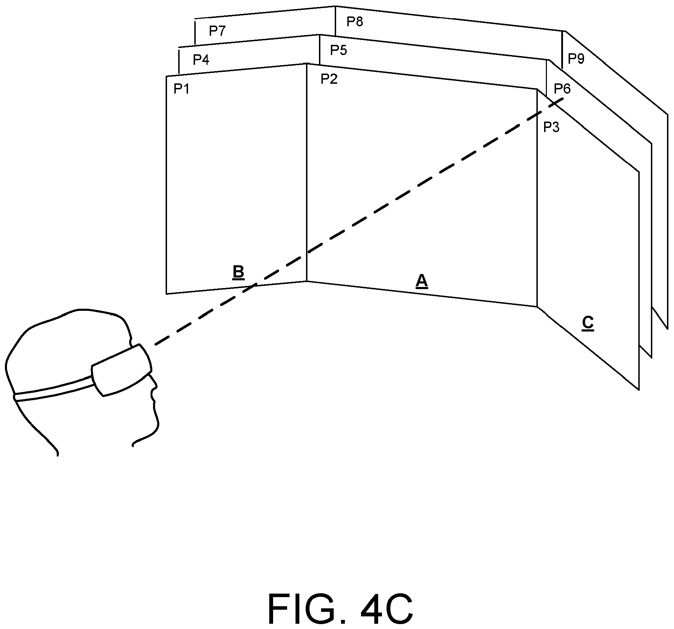

As shown in FIG. 4C, to move the virtual item P6 from the position shown in FIG. 4B to the main virtual work space A without disengaging one, or both, hands from the keyboard 200, the user may direct his gaze at the virtual item P6, as shown in FIG. 4C. In some implementations, the user's gaze direction may be based on an eye gaze direction of the user, detected and tracked by, for example a gaze tracking device 165 of the HMD 100 as described above. In some implementations, the user's gaze direction may be based on a detected head gaze direction, detected and tracked by, for example, sensors included in the sensing system 160 of the HMD 100, such as, for example, the IMU 162. Hereinafter, use of the term gaze may refer to an eye gaze direction, and/or a head gaze direction, simply for ease of discussion and illustration.

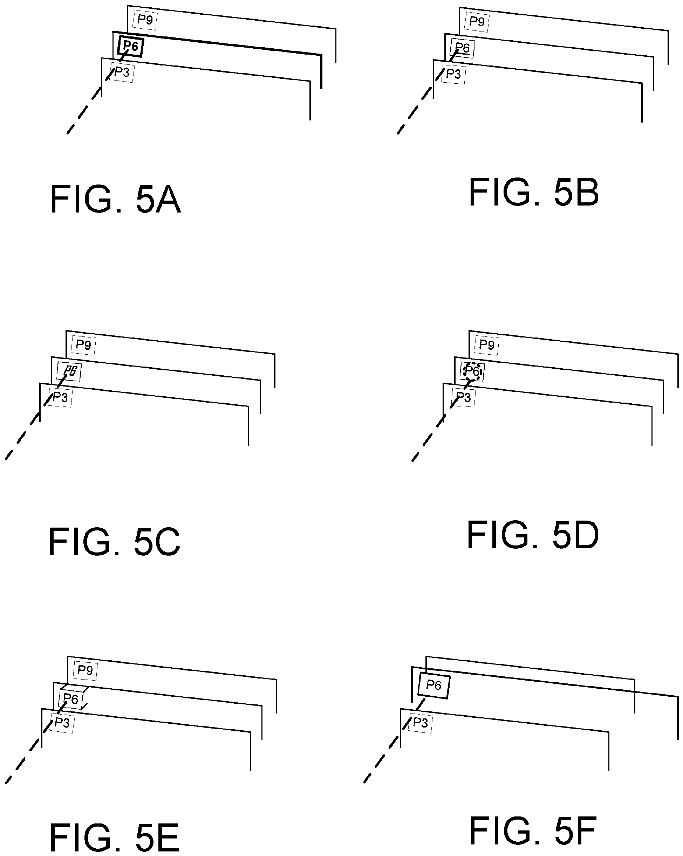

In response to detection that the user's gaze has been directed to the virtual item P6, as shown in FIG. 4C, the system may determine that the virtual item P6 has been selected by the user for further action. In some implementations, the system may generate an indication of the focus of the user's gaze, so that the user may provide a verification input, verifying or confirming that the user's gaze is directed at the intended the virtual item P6 to be selected. The indication of the focus may enable the user to confirm and/or recognize more precisely the direction of the user's gaze, enabling the user, for example, to position the gaze more precisely. Verification or confirmation in this manner may increase precision of the interaction of a user with the virtual world through the user's gaze, since an unintended gaze, or imprecision in the direction of the user's gaze, in the absence of verification or confirmation, does not lead to a selection of virtual item. This indication may be provided to the user in the form of, for example, a visual indication to the user. This visual indication may include, for example, a change in appearance of the virtual item, or a portion of the virtual item, or a representation of the virtual item, and the like. For example, in some implementations, in response to detection of a gaze directed at the virtual item P6, a portion of the virtual item P6, or a representation of the virtual item P6, that is visible to the user, may be bolded or highlighted, as shown in FIG. 5A, to provide visual verification to the user of where the detected gaze is directed. In some implementations, a portion of the virtual item P6, or a representation of the virtual item P6, that is visible to the user, may be underlined, as shown in FIG. 5B, or italicized, as shown in FIG. 5C, to provide visual verification to the user of where the detected gaze is directed. In some implementations, a visual indicator, or reticle, such as, for example, a cursor or a dot may be displayed at a position corresponding to the virtual item P6, as shown in FIG. 5D, to provide visual verification to the user of where the detected gaze is directed. In some implementations, a portion of the virtual item P6, or a representation of the virtual item P6, that is visible to the user, may be displayed three-dimensionally, as shown in FIG. 5E, or increased in size, as shown in FIG. 5F, to provide visual verification to the user of where the detected gaze is directed. The visual indicators shown in FIGs. 5A-5F are just some examples of visual indicators that may be generated to provide visual confirmation to the user as to which object a detected gaze is directed. Other types of indicators may also be applied.

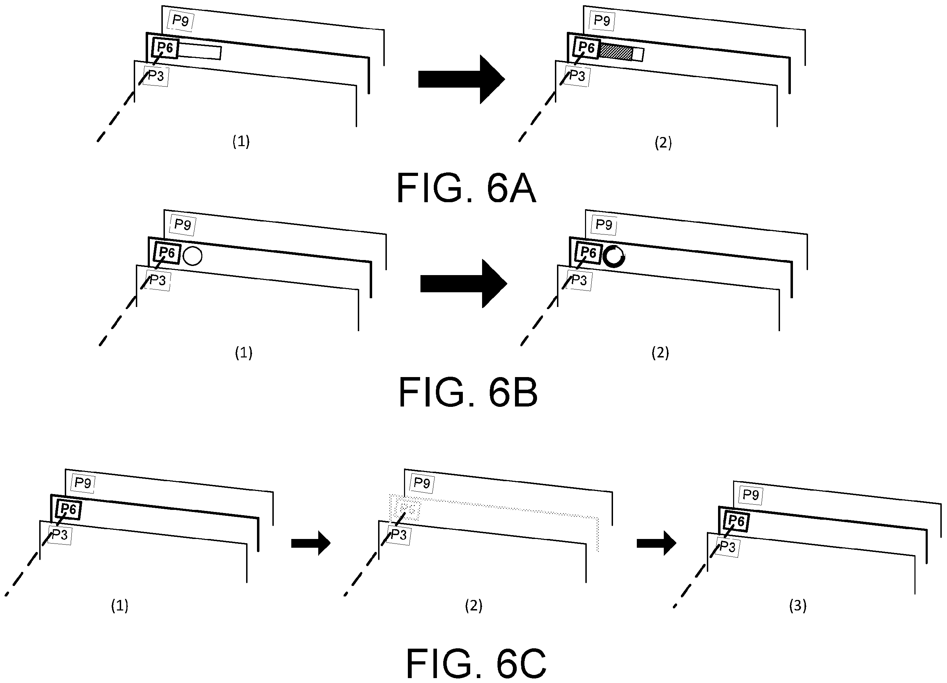

In some implementations, once the user gaze has been detected by the system, the system may wait to receive a user verification input, or user verification or confirmation command, prior to proceeding with further action related to the selected virtual item P6. For example, in some implementations, the user verification input, or user verification or confirmation command to proceed with further action related to the selection of the virtual item P6 by the user may be provided by a preset gesture such as, for example, a preset eye gesture such as a blink or blink pattern when an eye gaze is detected, or a preset head gesture when a head gaze is detected, while the hands of the user may remain engaged with the external device, such as the keyboard 200 described above. According to the invention, the user verification input, verifying the user's selection of the virtual item P6 is provided by a determination that the detected gaze has been sustained on the selected virtual item P6 for an amount of time greater than a preset threshold. In some implementations, the system may provide feedback to the user, indicating not just the selection of the virtual item P6, but indicating how long the detected gaze has been sustained. This indication may be provided in the form of, for example, a virtual progress bar, as shown in FIG. 6A, or other contour, such as, for example, the circular progress indicator shown in FIG. 6B. For example, in response to detection of the user's gaze directed at the virtual item P6 in FIGs. 6A(1) and 6B(1), the progress indicator (a bar indicator in FIG. 6A, or a circular indicator in FIG. 6B) gradually fills as time elapses until reaching the preset threshold amount of time, as shown in FIG.s 6A(2) and 6B(2). This indication may be provided in the form of a change in appearance, such as, for example, a gradual change in color, a gradual fade out and/or fade in, and the like. For example, in response to detection of the user's gaze directed at the virtual item P6 in FIG. 6C(1), the display of the virtual item P6 fades, as shown in FIG. 6C(2). Upon detection that the gaze has been sustained on the virtual item P6 for the requisite amount of time, the display of the virtual item P6 may fade back in, as shown in FIG. 6C(3), to provide visual confirmation to the user. The visual indicators shown in FIGs. 6A-6C provide just some examples of visual progress indicators that may be generated to provide a visual indication of progress to the user, and other types of indicators may also be applied.

In some implementations, the movement of the selected virtual item P6 may be executed in accordance with a set protocol or hierarchy. This set protocol or set hierarchy may be set by the user, in accordance with user preferences, or may be an established system setting. For example, in some implementations, upon detecting the user's gaze directed to the virtual item P6 for selection, the system may automatically move the selected virtual item P6 to a set virtual position, and rearrange the remaining virtual items P1-P5 and P7-P9 accordingly. The set virtual position may be, for example, one of the virtual work spaces that is set as the main work space, in accordance with the set protocol or hierarchy. Rearrangement of the remaining virtual items P1-P5 and P7-P9 may also be performed in accordance with the set protocol or hierarchy. In some implementations, the selected virtual item P6 may be automatically moved to a set virtual position, for example, moved to the main virtual work space A, in the virtual scene 500, and the remaining virtual items P1-P5 and P7-P9 rearranged, in accordance with a set protocol or hierarchy after receiving verification, as discussed above with respect to FIGs. 5A-5F and/or FIGs. 6A-6C. In some implementations, the movement of the selected virtual item P6 may be executed in response to a movement command input by the user.

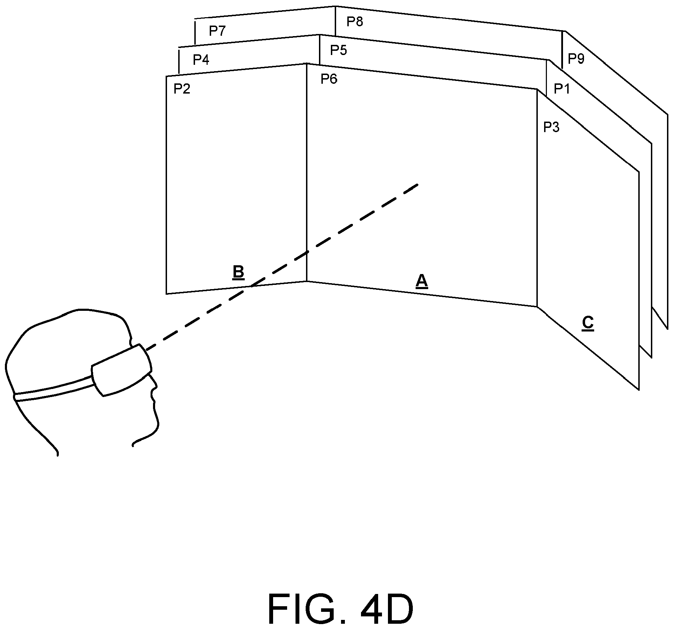

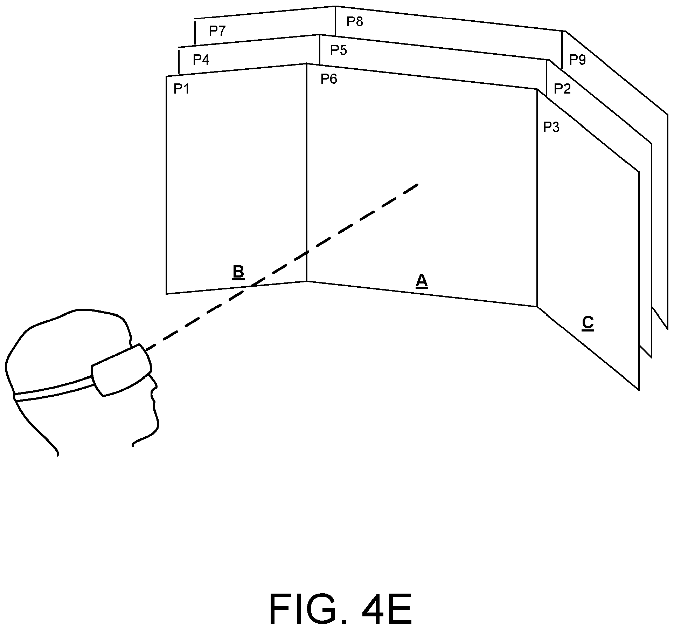

In some implementations, selection of the virtual item P6 in a particular manner may cause a corresponding action to be executed, such as, for example, the movement of the selected item P6 to a new virtual position, such as, for example, the main virtual work space A, as shown in FIGs. 4D and 4E, so that the selected virtual item may move into the main focus area of the user, without requiring disengagement of one, or both, hands from the keyboard 200, or other manual input device. In some implementations, in response to the movement of the selected virtual item P6 in to the main virtual work space A, the virtual item P2 (previously occupying the main virtual work space A) may be moved to one of the auxiliary work spaces B, C, as shown in FIG. 4D, to, for example, provide the user with ready reference to the virtual item P2. In some implementations, the virtual item P2 may be moved to the position previously occupied by the virtual item P6, as shown in FIG. 4E. The arrangement of the virtual items P1-P9 in the virtual scene 500 displayed to the user in response to the movement of the selected virtual item P6 into the main virtual work space A may be rearranged based on, for example, set user preferences, a set hierarchy or pattern, or other commands input by the user.

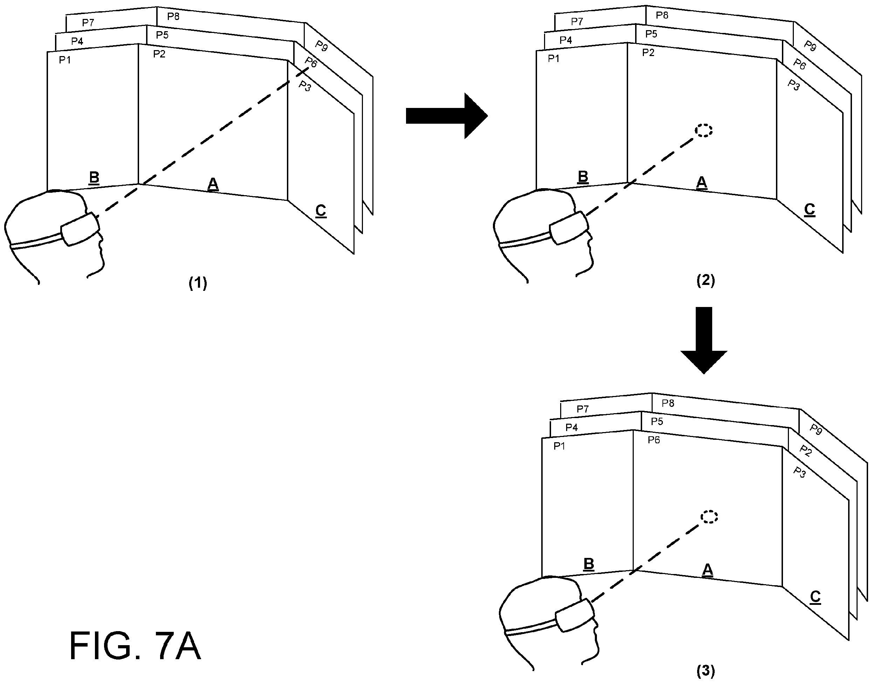

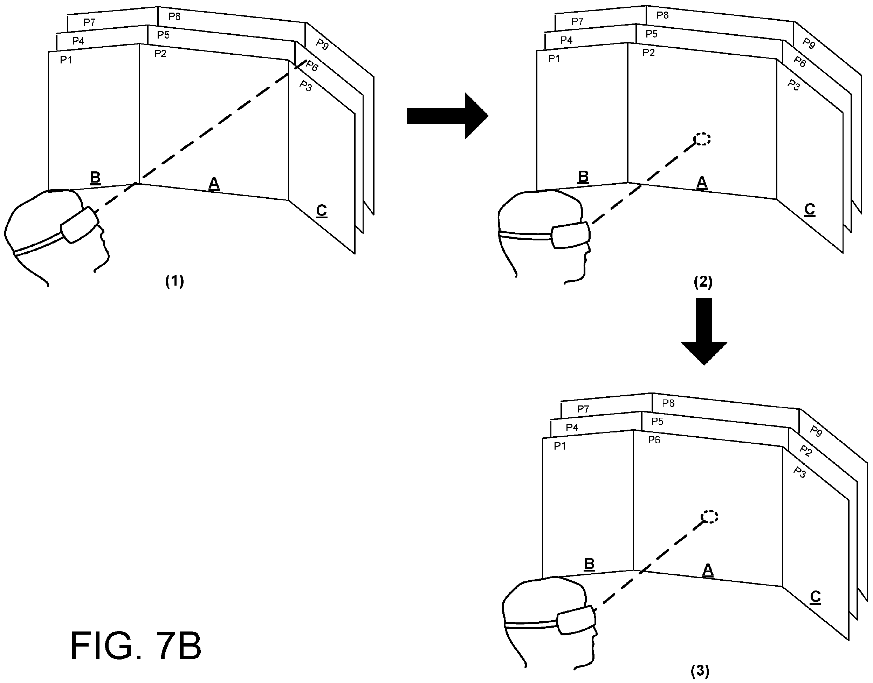

In some implementations, the movement of the selected virtual item P6 may be executed in response to another user command issued, for example, after the verification described above with respect to FIGs. 5A-5E and/or FIGs. 6A-6C. For example, in some implementations, this movement command may include, for example, a shift in gaze direction of the user, for example, a shift in eye gaze direction, or a shift in had gaze direction. As shown in FIG. 7A, the user may shift an eye gaze from a position at which the eye gaze is directed at the selected virtual object P6, as in FIG. 7A(2), to the position to which the selected virtual object P6 is to be moved, as in FIG. 7A(3), to cause the selected virtual object P6 to be moved to a particular virtual position within the virtual scene 500 displayed to the user. In some implementations, this movement command may include, for example, a shift in the head gaze of the user. As shown in FIG. 7B, the user may shift a head gaze from a position at which the head gaze is directed at the selected virtual object P6, as in FIG. 7B(2), to the position to which the selected virtual object P6 is to be moved, as in FIG. 7B(3), to cause the selected virtual object P6 to be moved to a particular virtual position within the virtual scene 500 displayed to the user.

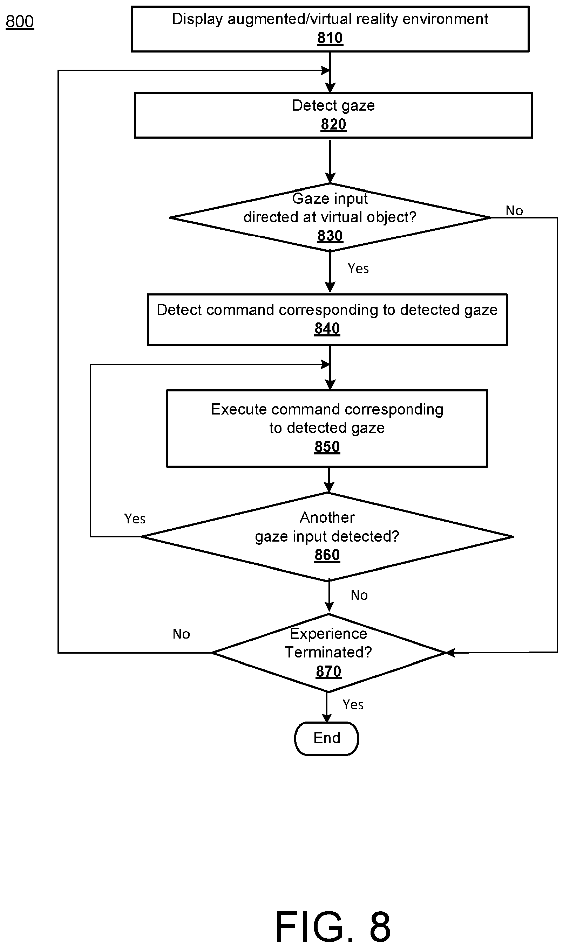

A method 800 of switching of virtual objects in response to gaze inputs in an augmented and/or virtual reality environment, in accordance with implementations as described herein, is shown in FIG. 8.

A user may initiate an augmented reality experience and/or a virtual reality experience using, for example, a computing device such as, for example, a system including a head mounted display device as described above, to generate the augmented reality and/or virtual reality environment (block 810). The system may display a virtual scene, such as the virtual scene 500 including a plurality of virtual objects P1-P9 as shown in FIGs. 4A-4E, and the system may detect a user gaze directed at one of the virtual objects displayed (block 820). As discussed above, the detected gaze may be an eye gaze detected by, for example, a device such as the gaze tracking device 165 of the HMD 100 described above with respect to FIGs. 2A-2B, or a head gaze detected by, for example, sensors such as the IMU 162 of the HMD 100 described above with respect to FIGs. 2A-2B. In response to the detection of the gaze, the system may determine if the detected gaze is intended for selection of a particular one of the virtual objects displayed in the virtual scene (block 830). The determination that the detected gaze is intentionally directed at a particular virtual object for selection may be made by the system based on, for example, a duration of the detected gaze or other type of verification, as described above with respect to FIGs. 5A-5F and/or FIGs. 6A -6C. In that manner, inadvertent selection of a virtual object through a gaze of relatively short duration can be avoided. If a command, for example, a command corresponding to the detected gaze, is received to move the selected virtual object, or otherwise rearrange the plurality of virtual objects displayed in the virtual scene (block 840), the system may move the virtual object(s) in accordance with the received command (block 850). In some implementations, the command to move the selected virtual object, or otherwise rearrange the plurality of virtual objects, may be carried out automatically by the system, in accordance with a set protocol, upon detection of the gaze (block 820, 830). In some implementations, the command to move the selected virtual object may be carried out in response to an input received from the user such as, for example, a detected movement or shift in the direction of the detected gaze, as described above with respect to FIGs. 7A and 7B. The process may continue until no further eye gazes are detected (block 860) and it is determined that the current augmented reality and/or virtual reality experience has been terminated (block 870).

In a system and method, in accordance with implementations described herein, virtual objects displayed to a user in a virtual environment may be rearranged, so that an a user may switch between active virtual objects, in response to detected head and/or eye gaze direction and movement, without the user disengaging one, or both, hands from a manual input device such as a keyboard, mouse, controller(s) and the like. This may provide the user with a connected, continuous virtual experience while avoiding disruption in work and/or thought and/or input processes.

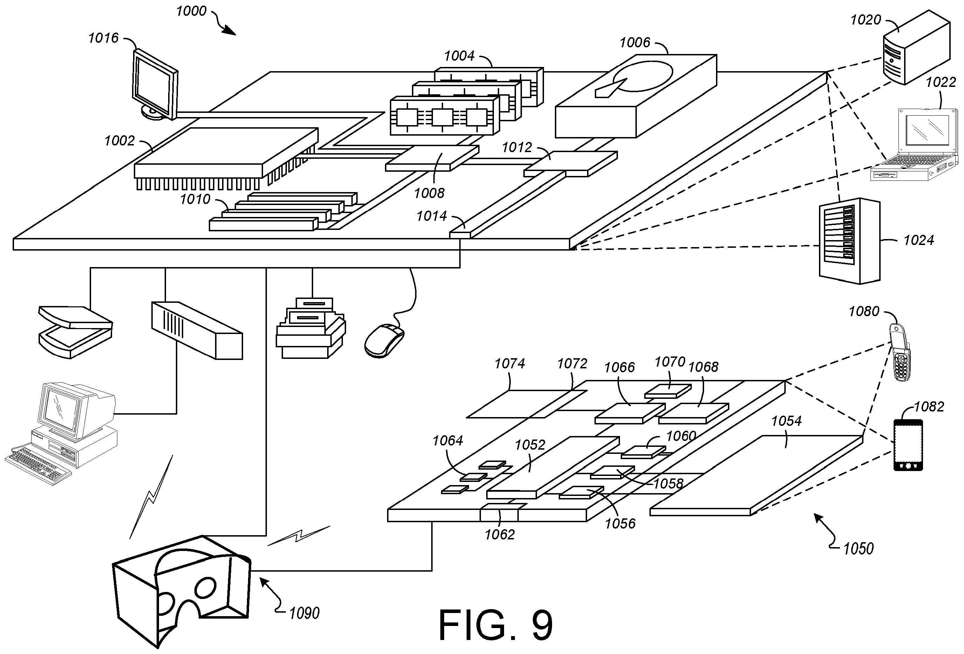

FIG. 9 shows an example of a computer device 1000 and a mobile computer device 1050, which may be used with the techniques described here. Computing device 1000 includes a processor 1002, memory 1004, a storage device 1006, a high-speed interface 1008 connecting to memory 1004 and high-speed expansion ports 1010, and a low speed interface 1012 connecting to low speed bus 1014 and storage device 1006. Each of the components 1002, 1004, 1006, 1008, 1010, and 1012, are interconnected using various busses, and may be mounted on a common motherboard or in other manners as appropriate. The processor 1002 can process instructions for execution within the computing device 1000, including instructions stored in the memory 1004 or on the storage device 1006 to display graphical information for a GUI on an external input/output device, such as display 1016 coupled to high speed interface 1008. In other implementations, multiple processors and/or multiple buses may be used, as appropriate, along with multiple memories and types of memory. Also, multiple computing devices 1000 may be connected, with each device providing portions of the necessary operations (e.g., as a server bank, a group of blade servers, or a multi-processor system).

The memory 1004 stores information within the computing device 1000. In one implementation, the memory 1004 is a volatile memory unit or units. In another implementation, the memory 1004 is a non-volatile memory unit or units. The memory 1004 may also be another form of computer-readable medium, such as a magnetic or optical disk.

The storage device 1006 is capable of providing mass storage for the computing device 1000. In one implementation, the storage device 1006 may be or contain a computer-readable medium, such as a floppy disk device, a hard disk device, an optical disk device, or a tape device, a flash memory or other similar solid state memory device, or an array of devices, including devices in a storage area network or other configurations. A computer program product can be tangibly embodied in an information carrier. The computer program product may also contain instructions that, when executed, perform one or more methods, such as those described above. The information carrier is a computer- or machine-readable medium, such as the memory 1004, the storage device 1006, or memory on processor 1002.

The high speed controller 1008 manages bandwidth-intensive operations for the computing device 1000, while the low speed controller 1012 manages lower bandwidth-intensive operations. Such allocation of functions is exemplary only. In one implementation, the high-speed controller 1008 is coupled to memory 1004, display 1016 (e.g., through a graphics processor or accelerator), and to high-speed expansion ports 1010, which may accept various expansion cards (not shown). In the implementation, low-speed controller 1012 is coupled to storage device 1006 and low-speed expansion port 1014. The low-speed expansion port, which may include various communication ports (e.g., USB, Bluetooth, Ethernet, wireless Ethernet) may be coupled to one or more input/output devices, such as a keyboard, a pointing device, a scanner, or a networking device such as a switch or router, e.g., through a network adapter.

The computing device 1000 may be implemented in a number of different forms, as shown in the figure. For example, it may be implemented as a standard server 1020, or multiple times in a group of such servers. It may also be implemented as part of a rack server system 1024. In addition, it may be implemented in a personal computer such as a laptop computer 1022. Alternatively, components from computing device 1000 may be combined with other components in a mobile device (not shown), such as device 1050. Each of such devices may contain one or more of computing device 1000, 1050, and an entire system may be made up of multiple computing devices 1000, 1050 communicating with each other.

Computing device 1050 includes a processor 1052, memory 1064, an input/output device such as a display 1054, a communication interface 1066, and a transceiver 1068, among other components. The device 1050 may also be provided with a storage device, such as a microdrive or other device, to provide additional storage. Each of the components 1050, 1052, 1064, 1054, 1066, and 1068, are interconnected using various buses, and several of the components may be mounted on a common motherboard or in other manners as appropriate.

The processor 1052 can execute instructions within the computing device 1050, including instructions stored in the memory 1064. The processor may be implemented as a chipset of chips that include separate and multiple analog and digital processors. The processor may provide, for example, for coordination of the other components of the device 1050, such as control of user interfaces, applications run by device 1050, and wireless communication by device 1050.

Processor 1052 may communicate with a user through control interface 1058 and display interface 1056 coupled to a display 1054. The display 1054 may be, for example, a TFT LCD (Thin-Film-Transistor Liquid Crystal Display) or an OLED (Organic Light Emitting Diode) display, or other appropriate display technology. The display interface 1056 may comprise appropriate circuitry for driving the display 1054 to present graphical and other information to a user. The control interface 1058 may receive commands from a user and convert them for submission to the processor 1052. In addition, an external interface 1062 may be provide in communication with processor 1052, so as to enable near area communication of device 1050 with other devices. External interface 1062 may provide, for example, for wired communication in some implementations, or for wireless communication in other implementations, and multiple interfaces may also be used.

The memory 1064 stores information within the computing device 1050. The memory 1064 can be implemented as one or more of a computer-readable medium or media, a volatile memory unit or units, or a non-volatile memory unit or units. Expansion memory 1074 may also be provided and connected to device 1050 through expansion interface 1072, which may include, for example, a SIMM (Single In Line Memory Module) card interface. Such expansion memory 1074 may provide extra storage space for device 1050, or may also store applications or other information for device 1050. Specifically, expansion memory 1074 may include instructions to carry out or supplement the processes described above, and may include secure information also. Thus, for example, expansion memory 1074 may be provide as a security module for device 1050, and may be programmed with instructions that permit secure use of device 1050. In addition, secure applications may be provided via the SIMM cards, along with additional information, such as placing identifying information on the SIMM card in a non-hackable manner.

The memory may include, for example, flash memory and/or NVRAM memory, as discussed below. In one implementation, a computer program product is tangibly embodied in an information carrier. The computer program product contains instructions that, when executed, perform one or more methods, such as those described above. The information carrier is a computer- or machine-readable medium, such as the memory 1064, expansion memory 1074, or memory on processor 1052, that may be received, for example, over transceiver 1068 or external interface 1062.

Device 1050 may communicate wirelessly through communication interface 1066, which may include digital signal processing circuitry where necessary. Communication interface 1066 may provide for communications under various modes or protocols, such as GSM voice calls, SMS, EMS, or MMS messaging, CDMA, TDMA, PDC, WCDMA, CDMA2000, or GPRS, among others. Such communication may occur, for example, through radio-frequency transceiver 1068. In addition, short-range communication may occur, such as using a Bluetooth, Wi-Fi, or other such transceiver (not shown). In addition, GPS (Global Positioning System) receiver module 1070 may provide additional navigation- and location-related wireless data to device 1050, which may be used as appropriate by applications running on device 1050.

Device 1050 may also communicate audibly using audio codec 1060, which may receive spoken information from a user and convert it to usable digital information. Audio codec 1060 may likewise generate audible sound for a user, such as through a speaker, e.g., in a handset of device 1050. Such sound may include sound from voice telephone calls, may include recorded sound (e.g., voice messages, music files, etc.) and may also include sound generated by applications operating on device 1050.

The computing device 1050 may be implemented in a number of different forms, as shown in the figure. For example, it may be implemented as a cellular telephone 1080. It may also be implemented as part of a smart phone 1082, personal digital assistant, or other similar mobile device.

Various implementations of the systems and techniques described here can be realized in digital electronic circuitry, integrated circuitry, specially designed ASICs (application specific integrated circuits), computer hardware, firmware, software, and/or combinations thereof. These various implementations can include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device.

These computer programs (also known as programs, software, software applications or code) include machine instructions for a programmable processor, and can be implemented in a high-level procedural and/or object-oriented programming language, and/or in assembly/machine language. As used herein, the terms "machine-readable medium" "computer-readable medium" refers to any computer program product, apparatus and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The term "machine-readable signal" refers to any signal used to provide machine instructions and/or data to a programmable processor.

To provide for interaction with a user, the systems and techniques described here can be implemented on a computer having a display device (e.g., a CRT (cathode ray tube) or LCD (liquid crystal display) monitor) for displaying information to the user and a keyboard and a pointing device (e.g., a mouse or a trackball) by which the user can provide input to the computer. Other kinds of devices can be used to provide for interaction with a user as well; for example, feedback provided to the user can be any form of sensory feedback (e.g., visual feedback, auditory feedback, or tactile feedback); and input from the user can be received in any form, including acoustic, speech, or tactile input.

The systems and techniques described here can be implemented in a computing system that includes a back end component (e.g., as a data server), or that includes a middleware component (e.g., an application server), or that includes a front end component (e.g., a client computer having a graphical user interface or a Web browser through which a user can interact with an implementation of the systems and techniques described here), or any combination of such back end, middleware, or front end components. The components of the system can be interconnected by any form or medium of digital data communication (e.g., a communication network). Examples of communication networks include a local area network ("LAN"), a wide area network ("WAN"), and the Internet.

The computing system can include clients and servers. A client and server are generally remote from each other and typically interact through a communication network. The relationship of client and server arises by virtue of computer programs running on the respective computers and having a client-server relationship to each other.

In some implementations, the computing devices depicted in FIG. 10 can include sensors that interface with a virtual reality (VR headset/HMD device 1090). For example, one or more sensors included on a computing device 1050 or other computing device depicted in FIG. 10, can provide input to VR headset 1090 or in general, provide input to a VR space. The sensors can include, but are not limited to, a touchscreen, accelerometers, gyroscopes, pressure sensors, biometric sensors, temperature sensors, humidity sensors, and ambient light sensors. The computing device 1050 can use the sensors to determine an absolute position and/or a detected rotation of the computing device in the VR space that can then be used as input to the VR space. For example, the computing device 1050 may be incorporated into the VR space as a virtual object, such as a controller, a laser pointer, a keyboard, a weapon, etc. Positioning of the computing device/virtual object by the user when incorporated into the VR space can allow the user to position the computing device so as to view the virtual object in certain manners in the VR space. For example, if the virtual object represents a laser pointer, the user can manipulate the computing device as if it were an actual laser pointer. The user can move the computing device left and right, up and down, in a circle, etc., and use the device in a similar fashion to using a laser pointer.

In some implementations, one or more input devices included on, or connect to, the computing device 1050 can be used as input to the VR space. The input devices can include, but are not limited to, a touchscreen, a keyboard, one or more buttons, a trackpad, a touchpad, a pointing device, a mouse, a trackball, a joystick, a camera, a microphone, earphones or buds with input functionality, a gaming controller, or other connectable input device. A user interacting with an input device included on the computing device 1050 when the computing device is incorporated into the VR space can cause a particular action to occur in the VR space.

In some implementations, a touchscreen of the computing device 1050 can be rendered as a touchpad in VR space. A user can interact with the touchscreen of the computing device 1050. The interactions are rendered, in VR headset 1090 for example, as movements on the rendered touchpad in the VR space. The rendered movements can control virtual objects in the VR space.

In some implementations, one or more output devices included on the computing device 1050 can provide output and/or feedback to a user of the VR headset 1090 in the VR space. The output and feedback can be visual, tactical, or audio. The output and/or feedback can include, but is not limited to, vibrations, turning on and off or blinking and/or flashing of one or more lights or strobes, sounding an alarm, playing a chime, playing a song, and playing of an audio file. The output devices can include, but are not limited to, vibration motors, vibration coils, piezoelectric devices, electrostatic devices, light emitting diodes (LEDs), strobes, and speakers.

In some implementations, the computing device 1050 may appear as another object in a computer-generated, 3D environment. Interactions by the user with the computing device 1050 (e.g., rotating, shaking, touching a touchscreen, swiping a finger across a touch screen) can be interpreted as interactions with the object in the VR space. In the example of the laser pointer in a VR space, the computing device 1050 appears as a virtual laser pointer in the computer-generated, 3D environment. As the user manipulates the computing device 1050, the user in the VR space sees movement of the laser pointer. The user receives feedback from interactions with the computing device 1050 in the VR environment on the computing device 1050 or on the VR headset 1090.

In some implementations, a computing device 1050 may include a touchscreen. For example, a user can interact with the touchscreen in a particular manner that can mimic what happens on the touchscreen with what happens in the VR space. For example, a user may use a pinching-type motion to zoom content displayed on the touchscreen. This pinching-type motion on the touchscreen can cause information provided in the VR space to be zoomed. In another example, the computing device may be rendered as a virtual book in a computer-generated, 3D environment. In the VR space, the pages of the book can be displayed in the VR space and the swiping of a finger of the user across the touchscreen can be interpreted as turning/flipping a page of the virtual book. As each page is turned/flipped, in addition to seeing the page contents change, the user may be provided with audio feedback, such as the sound of the turning of a page in a book.

In some implementations, one or more input devices in addition to the computing device (e.g., a mouse, a keyboard) can be rendered in a computer-generated, 3D environment. The rendered input devices (e.g., the rendered mouse, the rendered keyboard) can be used as rendered in the VR space to control objects in the VR space.

Computing device 1000 is intended to represent various forms of digital computers and devices, including, but not limited to laptops, desktops, workstations, personal digital assistants, servers, blade servers, mainframes, and other appropriate computers. Computing device 1050 is intended to represent various forms of mobile devices, such as personal digital assistants, cellular telephones, smart phones, and other similar computing devices. The components shown here, their connections and relationships, and their functions, are meant to be exemplary only, and are not meant to limit implementations of the inventions described and/or claimed in this document.

## Claims

1. A method for object selection and placement in a virtual reality environment, comprising:
displaying, on a display of a head mounted display, HMD, device (100), a virtual user interface in the virtual reality environment, the virtual user interface including a plurality of virtual objects;
detecting, by a gaze tracking device of the HMD (100), an eye gaze directed at a first virtual object of the plurality of virtual objects, the first virtual object being positioned at a first virtual position;
receiving a verification input verifying selection of the first virtual object provided by a user, by determining that the detected eye gaze has been sustained on the selected virtual object for an amount of time greater than a preset threshold, including:
displaying a first visual indicator, the first visual indicator providing a visual indication of the first virtual object of the plurality of virtual objects at which the detected eye gaze is directed, and
detecting the duration of the eye gaze directed at the first virtual object in response to the display of the first visual indicator;
moving the first virtual object to a second virtual position in response to the verification of the selection of the first virtual object, including:
moving the first virtual object to a main virtual position after it is determined that the duration of the gaze on the first virtual object is greater than the preset threshold; and
rearranging the display of remaining virtual objects of the plurality of virtual objects based on the movement of the first virtual object, **characterized in that** detecting the duration of the gaze directed at the first virtual object also including:
displaying a second visual indicator, the second visual indicator providing a visual indication of the duration of the detected gaze, and progress toward the set threshold.

2. The method of claim 1, wherein
moving the selected virtual object to a main virtual position including:
moving the first virtual object in response to a movement command; and
moving a second virtual object from the main virtual position to the first virtual position, or to one of a plurality of auxiliary virtual positions in the virtual environment, based on the movement of the first virtual object.

3. The method of claim 1, wherein
moving the first virtual object to a second virtual position including:
detecting a gaze movement, from the first virtual position corresponding to an initial virtual position of the first virtual object, to the second virtual position; and
moving the first virtual object from the first virtual position to the second virtual position in response to the detected gaze movement.

4. The method of claim 1, wherein
moving the first virtual object to a second virtual position and rearranging the display of the remaining virtual objects of the plurality of virtual objects based on the movement of the first virtual object including:
moving the first virtual object to the second virtual position, the second virtual position being previously defined based on user preferences; and
moving at least one of the remaining virtual objects of the plurality of virtual objects to a new virtual position, the new virtual position being previously defined based on user preferences.

5. The method of claim 1, wherein displaying a virtual user interface includes displaying a virtual user interface having:
a main virtual position;
at least one auxiliary virtual position, wherein
a virtual object of the plurality of virtual objects occupying the main virtual position is a currently active virtual object of the virtual user interface,
a virtual object of the plurality of virtual objects occupying the at least one auxiliary virtual position is an inactive virtual object of the plurality of virtual objects.

6. A system for object selection and placement in a virtual reality environment, comprising:
a computing device (1000) configured to generate the virtual reality environment, the computing device (1000) including:
a memory (1004) storing executable instructions; and
a processor (1002) configured to execute the instructions to cause the computing device (1000) to:
display, on a display of a head mounted display, HMD, device (100), a virtual user interface in the virtual reality environment, the virtual user interface including a plurality of virtual objects;
detect an eye gaze directed at a first virtual object of the plurality of virtual objects, the first virtual object being positioned at a first virtual position;
receive a verification input, provided by a user, verifying selection of the first virtual object, by determining that the detected eye gaze has been sustained on the selected virtual object for an amount of time greater than a preset threshold, including:
display a first visual indicator, the first visual indicator providing a visual indication of the first virtual object of the plurality of virtual objects at which the detected eye gaze is directed; and
detect the duration of the eye gaze directed at the first virtual object in response to the display of the first visual indicator;
move the first virtual object to a second virtual position in response to the verification of the selection of the first virtual object, wherein the instructions cause the computing device (1000) to:
move the first virtual object to a main virtual position after it is determined that the duration of the gaze on the first virtual object is greater than the preset threshold; and
rearrange the display of remaining virtual objects of the plurality of virtual objects based on the movement of the first virtual object, **characterized in that**, in detecting the duration of the eye gaze directed at the first virtual object, the instructions cause the computing device to also:
display a second visual indicator, the second visual indicator providing a visual indication of the duration of the detected gaze, and progress toward the preset threshold.

7. The system of claim 6, wherein, in moving the selected virtual object to the main virtual position, the instructions cause the computing device (1000) to:
move the first virtual object in response to a movement command; and
move a second virtual object from the main virtual position to the first virtual position, or to one of a plurality of auxiliary virtual positions in the virtual environment, based on the movement of the first virtual object.

8. The system of claim 6, wherein, in moving the first virtual object to the second virtual position, the instructions cause the computing device (1000) to:
detect a gaze movement, from the first virtual position corresponding to an initial virtual position of the first virtual object, to the second virtual position; and
move the first virtual object from the first virtual position to the second virtual position in response to the detected gaze movement.

9. The system of claim 6, wherein, in moving the first virtual object to the second virtual position and rearranging the display of the remaining virtual objects of the plurality of virtual objects based on the movement of the first virtual object, the instructions cause the computing device (1000) to:
move the first virtual object to the second virtual position, the second virtual position being previously set based on user preferences; and
move at least one of the remaining virtual objects of the plurality of virtual objects to a new virtual position, the new virtual position being previously set based on user preferences.

## Patentansprüche

1. Verfahren zum Auswählen und Platzieren eines Objekts in einer virtuellen Realitätsumgebung, umfassend:
Anzeigen, auf einer Anzeige eines am Kopf befestigten Anzeigegeräts, HMD, (100), einer virtuellen Benutzeroberfläche in der virtuellen Realitätsumgebung, wobei die virtuelle Benutzeroberfläche eine Vielzahl von virtuellen Objekten beinhaltet;
Erkennen, durch eine Blickverfolgungsvorrichtung des HMD (100), eines auf ein erstes virtuelles Objekt der Vielzahl von virtuellen Objekten gerichteten Blicks, wobei das erste virtuelle Objekt an einer ersten virtuellen Position positioniert ist;
Empfangen einer durch einen Benutzer bereitgestellten Verifizierungseingabe, die die Auswahl des ersten virtuellen Objekts verifiziert, indem ermittelt wird, dass der erkannte Blick für einen Zeitraum, der größer als ein vorgegebener Schwellenwert ist, auf dem ausgewählten virtuellen Objekt gehalten wurde, beinhaltend:
Anzeigen eines ersten visuellen Anzeigers, wobei der erste visuelle Anzeiger eine visuelle Angabe des ersten virtuellen Objekts aus der Vielzahl von virtuellen Objekten, auf das der erkannte Blick gerichtet ist, bereitstellt, und
Erkennen der Dauer des auf das erste virtuelle Objekt gerichteten Blicks in Reaktion auf das Anzeigen des ersten visuellen Anzeigers;
Bewegen des ersten virtuellen Objekts zu einer zweiten virtuellen Position in Reaktion auf die Verifizierung der Auswahl des ersten virtuellen Objekts, beinhaltend:
Bewegen des ersten virtuellen Objekts zu einer virtuellen Hauptposition, nachdem bestimmt wird, dass die Dauer des Blicks auf das erste virtuelle Objekt länger ist als der festgelegte Schwellenwert; und
Neuanordnen der Anzeige der verbleibenden virtuellen Objekte der Vielzahl von virtuellen Objekten basierend auf der Bewegung des ersten virtuellen Objekts, **dadurch gekennzeichnet, dass** das Erkennen der Dauer des auf das erste virtuelle Objekt gerichteten Blicks auch beinhaltet:
Anzeigen eines zweiten visuellen Anzeigers, wobei der zweite visuelle Anzeiger eine visuelle Angabe der Dauer des erkannten Blicks und des Fortschritts in Richtung des festgelegten Schwellenwerts bereitstellt.

2. Verfahren nach Anspruch 1, wobei das Bewegen des ausgewählten virtuellen Objekts zu einer virtuellen Hauptposition
beinhaltet:
Bewegen des ersten virtuellen Objekts in Reaktion auf einen Bewegungsbefehl; und
Bewegen eines zweiten virtuellen Objekts von der virtuellen Hauptposition zur ersten virtuellen Position oder zu einer aus einer Vielzahl von virtuellen Hilfspositionen in der virtuellen Umgebung, basierend auf dem Bewegen des ersten virtuellen Objekts.

3. Verfahren nach Anspruch 1, wobei das Bewegen des ersten virtuellen Objekts zu einer zweiten virtuellen Hauptposition
beinhaltet:
Erkennen einer Blickbewegung von der ersten virtuellen Position, die einer virtuellen Ausgangsposition des ersten virtuellen Objekts entspricht, zur zweiten virtuellen Position; und
Bewegen des ersten virtuellen Objekts von der ersten virtuellen Position zur zweiten virtuellen Position in Reaktion auf die erkannte Blickbewegung.

4. Verfahren nach Anspruch 1, wobei das Bewegen des ersten virtuellen Objekts zu einer zweiten virtuellen Hauptposition und
das Neuanordnen der Anzeige der verbleibenden virtuellen Objekte aus der Vielzahl von virtuellen Objekten, basierend auf dem Bewegen des ersten virtuellen Objekts, beinhaltet:
Bewegen des ersten virtuellen Objekts zur zweiten virtuellen Position, wobei die zweite Position vorab basierend auf Benutzerpräferenzen bestimmt wird; und
Bewegen zumindest eines der verbleibenden virtuellen Objekte der Vielzahl von virtuellen Objekten zu einer neuen virtuellen Position, wobei die neue virtuelle Position vorab basierend auf Benutzerpräferenzen bestimmt wird.

5. Verfahren nach Anspruch 1, wobei das Anzeigen einer virtuellen Benutzeroberfläche das Anzeigen einer virtuellen Benutzeroberfläche beinhaltet, aufweisend:
eine virtuelle Hauptposition;
zumindest eine virtuelle Hilfsposition, wobei ein virtuelles Objekt der Vielzahl von virtuellen Objekten, das die virtuelle Hauptposition einnimmt, ein derzeit aktives virtuelles Objekt der virtuellen Benutzeroberfläche ist,
ein virtuelles Objekt der Vielzahl von virtuellen Objekten, das die zumindest eine virtuelle Hilfsposition einnimmt, ein inaktives virtuelles Objekt der Vielzahl von virtuellen Objekten ist.

6. System zum Auswählen und Platzieren eines Objekts in einer virtuellen Realitätsumgebung, umfassend:
ein Computergerät (1000), das konfiguriert ist, die virtuelle Realitätsumgebung zu erzeugen, wobei das Computergerät (1000) beinhaltet:
einen Speicher (1004), der ausführbare Anweisungen speichert; und
einen Prozessor (1002), der konfiguriert ist, die Anweisungen auszuführen, das Computergerät (1000) zu veranlassen zum:
Anzeigen, auf einer Anzeige eines am Kopf befestigten Anzeigegeräts, HMD, (100), einer virtuellen Benutzeroberfläche in der virtuellen Realitätsumgebung, wobei die virtuelle Benutzeroberfläche eine Vielzahl von virtuellen Objekten beinhaltet;
Erkennen eines auf ein erstes virtuelles Objekt der Vielzahl von virtuellen Objekten gerichteten Blicks, wobei das erste virtuelle Objekt an einer ersten virtuellen Position positioniert ist;
Empfangen einer durch einen Benutzer bereitgestellten Verifizierungseingabe, die die Auswahl des virtuellen Objekts verifiziert, indem ermittelt wird, dass der erkannte Blick für einen Zeitraum, der größer als ein vorgegebener Schwellenwert ist, auf dem ausgewählten virtuellen Objekt gehalten wurde, beinhaltend:
Anzeigen eines ersten visuellen Anzeigers, wobei der erste visuelle Anzeiger eine visuelle Angabe des ersten virtuellen Objekts aus der Vielzahl von virtuellen Objekten bereitstellt, auf das der erkannte Blick gerichtet ist; und
Erkennen der Dauer des auf das erste virtuelle Objekt gerichteten Blicks in Reaktion auf das Anzeigen des ersten visuellen Anzeigers;
Bewegen des ersten virtuellen Objekts zu einer zweiten virtuellen Position in Reaktion auf die Verifizierung der Auswahl des ersten virtuellen Objekts, wobei die Anweisungen das Computergerät (1000) veranlassen, um:
das erste virtuelle Objekt zu einer virtuellen Hauptposition zu bewegen, nachdem ermittelt wird, dass die Dauer des Blicks auf das erste virtuelle Objekt länger ist als der festgelegte Schwellenwert; und
die Anzeige der verbleibenden virtuellen Objekte der Vielzahl von virtuellen Objekten basierend auf der Bewegung des ersten virtuellen Objekts neu anzuordnen, **dadurch gekennzeichnet, dass** beim Erkennen der Dauer des auf das erste virtuelle Objekt gerichteten Blicks die Anweisungen das Computergerät auch veranlassen, um:
einen zweiten visuellen Anzeiger anzuzeigen, wobei der zweite visuelle Anzeiger eine visuelle Angabe der Dauer des erkannten Blicks und des Fortschritts in Richtung des festgelegten Schwellenwerts bereitstellt.

7. System nach Anspruch 6, wobei die Anweisungen beim Bewegen des ausgewählten virtuellen Objekts zur virtuellen Hauptposition das Computergerät (1000) veranlassen:
das erste virtuelle Objekt in Reaktion auf einen Bewegungsbefehl zu bewegen; und
ein zweites virtuelles Objekt von der virtuellen Hauptposition zur ersten virtuellen Position oder zu einer aus einer Vielzahl von virtuellen Hilfspositionen in der virtuellen Umgebung zu bewegen, basierend auf dem Bewegen des ersten virtuellen Objekts.

8. System nach Anspruch 6, wobei die Anweisungen das Computergerät (1000) beim Bewegen des ersten virtuellen Objekts zur zweiten virtuellen Position veranlassen:
eine Blickbewegung von der ersten virtuellen Position, die einer virtuellen Ausgangsposition des ersten virtuellen Objekts entspricht, zur zweiten virtuellen Position zu erkennen; und
das erste virtuelle Objekt in Reaktion auf die erkannte Blickbewegung von der ersten virtuellen Position zur zweiten virtuellen Position zu bewegen.

9. System nach Anspruch 6, wobei die Anweisungen das Computergerät (1000) beim Bewegen des ersten virtuellen Objekts zur zweiten virtuellen Position und Neuanordnen der Anzeige der verbleibenden virtuellen Objekte aus der Vielzahl von virtuellen Objekten basierend auf dem Bewegen des ersten virtuellen Objekts veranlassen:
das erste virtuelle Objekt zur zweiten virtuellen Position zu bewegen, wobei die zweite virtuelle Position vorab basierend auf Benutzerpräferenzen festgelegt wird; und
zumindest eines der verbleibenden virtuellen Objekte aus der Vielzahl von virtuellen Objekten zu einer neuen virtuellen Position zu bewegen, wobei die neue virtuelle Position vorab basierend auf Benutzerpräferenzen festgelegt wird.

## Revendications

1. Procédé de sélection et de placement d'objets dans un environnement de réalité virtuelle, comprenant :
l'affichage, sur un écran d'un dispositif d'affichage monté sur tête, HMD (100), d'une interface utilisateur virtuelle dans l'environnement de réalité virtuelle, l'interface utilisateur virtuelle incluant une pluralité d'objets virtuels ;
la détection, par un dispositif de suivi du regard du HMD (100), d'un regard dirigé vers un premier objet virtuel de la pluralité d'objets virtuels, le premier objet virtuel étant positionné au niveau d'une première position virtuelle ;
la réception d'une entrée de vérification vérifiant la sélection du premier objet virtuel fourni par un utilisateur, en déterminant que le regard détecté a été maintenu sur l'objet virtuel sélectionné pendant une quantité de temps supérieure à un seuil prédéfini, incluant :
l'affichage d'un premier indicateur visuel, le premier indicateur visuel fournissant une indication visuelle du premier objet virtuel de la pluralité d'objets virtuels sur lequel le regard détecté est dirigé, et
la détection de la durée du regard dirigé vers le premier objet virtuel en réponse à l'affichage du premier indicateur visuel ;
le déplacement du premier objet virtuel vers une deuxième position virtuelle en réponse à la vérification de la sélection du premier objet virtuel, incluant :
le déplacement du premier objet virtuel vers une position virtuelle principale après qu'il a été déterminé que la durée du regard sur le premier objet virtuel est supérieure au seuil prédéfini ; et
le réagencement de l'affichage des objets virtuels restants de la pluralité d'objets virtuels sur la base du déplacement du premier objet virtuel, **caractérisé en ce que** la détection de la durée du regard dirigé vers le premier objet virtuel incluant également :
l'affichage d'un deuxième indicateur visuel, le deuxième indicateur visuel fournissant une indication visuelle de la durée du regard détecté, et de la progression vers le seuil défini.

2. Procédé selon la revendication 1, dans lequel le déplacement de l'objet virtuel sélectionné vers une position virtuelle principale inclut :
le déplacement du premier objet virtuel en réponse à un ordre de déplacement ; et
le déplacement d'un deuxième objet virtuel de la position virtuelle principale à la première position virtuelle, ou à l'une d'une pluralité de positions virtuelles auxiliaires dans l'environnement virtuel, sur la base du déplacement du premier objet virtuel.

3. Procédé selon la revendication 1, dans lequel le déplacement du premier objet virtuel vers une deuxième position virtuelle inclut :
la détection d'un déplacement de regard, depuis la première position virtuelle correspondant à une position virtuelle initiale du premier objet virtuel, vers la deuxième position virtuelle ; et
le déplacement du premier objet virtuel de la première position virtuelle à la deuxième position virtuelle en réponse au déplacement de regard détecté.

4. Procédé selon la revendication 1, dans lequel le déplacement du premier objet virtuel vers une deuxième position virtuelle et
le réagencement de l'affichage des objets virtuels restants de la pluralité d'objets virtuels sur la base du déplacement du premier objet virtuel incluent :
le déplacement du premier objet virtuel vers la deuxième position virtuelle, la deuxième position virtuelle étant préalablement définie sur la base des préférences de l'utilisateur ; et
le déplacement d'au moins un des objets virtuels restants de la pluralité d'objets virtuels vers une nouvelle position virtuelle, la nouvelle position virtuelle étant préalablement définie sur la base des préférences de l'utilisateur.

5. Procédé selon la revendication 1, dans lequel l'affichage d'une interface utilisateur virtuelle inclut l'affichage d'une interface utilisateur virtuelle ayant :
une position virtuelle principale ;
au moins une position virtuelle auxiliaire, dans lequel un objet virtuel de la pluralité d'objets virtuels occupant la position virtuelle principale est un objet virtuel actuellement actif de l'interface utilisateur virtuelle,
un objet virtuel de la pluralité d'objets virtuels occupant l'au moins une position virtuelle auxiliaire est un objet virtuel inactif de la pluralité d'objets virtuels.

6. Système de sélection et de placement d'objets dans un environnement de réalité virtuelle, comprenant :
un dispositif informatique (1000) configuré pour générer
l'environnement de réalité virtuelle,
le dispositif informatique (1000) incluant :
une mémoire (1004) stockant des instructions exécutables ; et
un processeur (1002) configuré pour exécuter les instructions pour amener le dispositif informatique (1000) à :
afficher, sur un écran d'un dispositif d'affichage monté sur tête, HMD (100), une interface utilisateur virtuelle dans l'environnement de réalité virtuelle, l'interface virtuelle incluant une pluralité d'objets virtuels ;
détecter un regard dirigé vers un premier objet virtuel de la pluralité d'objets virtuels, le premier objet virtuel étant positionné au niveau d'une première position virtuelle ;
recevoir une entrée de vérification, fournie par un utilisateur, vérifiant la sélection du premier objet virtuel, en déterminant que le regard détecté a été maintenu sur l'objet virtuel sélectionné pendant une quantité de temps supérieure à un seuil prédéfini, incluant :
afficher un premier indicateur visuel, le premier indicateur visuel fournissant une indication visuelle du premier objet virtuel de la pluralité d'objets virtuels sur lequel le regard détecté est dirigé ; et
détecter la durée du regard dirigé vers le premier objet virtuel en réponse à l'affichage du premier indicateur visuel ;
déplacer le premier objet virtuel vers une deuxième position virtuelle en réponse à la vérification de la sélection du premier objet virtuel, dans lequel les instructions amènent le dispositif informatique (1000) à :
déplacer le premier objet virtuel vers une position virtuelle principale après qu'il a été déterminé que la durée du regard sur le premier objet virtuel est supérieure au seuil prédéfini ; et
réagencer l'affichage des objets virtuels restants de la pluralité d'objets virtuels sur la base du déplacement du premier objet virtuel, **caractérisé en ce que**, en détectant la durée du regard dirigé vers le premier objet virtuel, les instructions amènent le dispositif informatique à également :
afficher un deuxième indicateur visuel, le deuxième indicateur visuel fournissant une indication visuelle de la durée du regard détecté, et de la progression vers le seuil prédéfini.

7. Système selon la revendication 6, dans lequel, en déplaçant l'objet virtuel sélectionné vers la position virtuelle principale, les instructions amènent le dispositif informatique (1000) à :
déplacer le premier objet virtuel en réponse à un ordre de déplacement ; et
déplacer un deuxième objet virtuel de la position virtuelle principale à la première position virtuelle, ou à l'une d'une pluralité de positions virtuelles auxiliaires dans l'environnement virtuel, sur la base du déplacement du premier objet virtuel.

8. Système selon la revendication 6, dans lequel, en déplaçant le premier objet virtuel vers la deuxième position virtuelle, les instructions amènent le dispositif informatique (1000) à :
détecter un déplacement de regard, depuis la première position virtuelle correspondant à une position virtuelle initiale du premier objet virtuel, vers la deuxième position virtuelle ; et
déplacer le premier objet virtuel de la première position virtuelle à la deuxième position virtuelle en réponse au déplacement de regard détecté.

9. Système selon la revendication 6, dans lequel, lors du déplacement du premier objet virtuel vers la deuxième position virtuelle et du réagencement de l'affichage des objets virtuels restants de la pluralité d'objets virtuels sur la base du déplacement du premier objet virtuel, les instructions amènent le dispositif informatique (1000) à :
déplacer le premier objet virtuel vers la deuxième position virtuelle, la deuxième position virtuelle étant préalablement définie sur la base des préférences de l'utilisateur ; et
déplacer au moins un des objets virtuels restants de la pluralité d'objets virtuels vers une nouvelle position virtuelle, la nouvelle position virtuelle étant préalablement définie sur la base des préférences de l'utilisateur.
